# FASCICULE DE BREVET EUROPEEN

(11) **EP 3 665 380 B1**
(45) Date de publication et mention de la délivrance du brevet: **13.03.2024**
(21) Numéro de dépôt: 18762381.4
(22) Date de dépôt: 07.08.2018
(51) Int. Cl.: F02K 1/54, B29C 45/14, F02K 1/72

(54) **GRILLE D'INVERSEUR DE POUSSÉE POUR NACELLE D'AÉRONEF**
SCHUBUMKEHRERKASKADE FÜR EINE FLUGZEUGGONDEL
THRUST REVERSER CASCADE FOR AN AIRCRAFT NACELLE

(30) Priorité: 07.08.2017 FR 1757569
(43) Date de publication de la demande: 17.06.2020
(73) Titulaire: Safran Nacelles, 76700 Gonfreville-l'Orcher (FR); Safran, 75015 Paris (FR)
(72) Inventeur: OLIVEUX, Geraldine, 76700 Gonfreville L'Orcher (FR); DESJOYEAUX, Bertrand, 76700 Gonfreville L'Orcher (FR); THOMAS, Cedric, 76700 Gonfreville L'Orcher (FR)
(74) Mandataire: Germain Maureau
(86) Numéro de dépôt international: PCT/FR2018/052031
(87) Numéro de publication internationale: WO 2019/030454

(56) Documents cités:
- JP-A- H0 716 935
- US-A- 5 152 860
- US-A1- 2016 186 689
- US-A1- 2016 263 820

## Description

La présente invention se rapporte à une grille d'inverseur de poussée pour nacelle de turboréacteur d'aéronef.

Une nacelle de turboréacteur présente généralement une structure sensiblement tubulaire comprenant une entrée d'air en amont du turboréacteur, une section médiane destinée à entourer une soufflante du turboréacteur, une section aval destinée à entourer la chambre de combustion du turboréacteur et intégrant éventuellement des moyens d'inversion de poussée. La nacelle est généralement terminée par une tuyère d'éjection dont la sortie est située en aval du turboréacteur.

Les nacelles modernes sont destinées à abriter un turboréacteur double flux apte à générer par l'intermédiaire des pâles de la soufflante en rotation un flux d'air chaud (flux primaire) et un flux d'air froid (flux secondaire) qui circule à l'extérieur du turboréacteur à travers un passage annulaire, également appelé veine, formé entre un carénage du turboréacteur et une paroi interne de la nacelle.

Les deux flux d'air sont éjectés du turboréacteur par l'arrière de la nacelle. Le rôle d'un inverseur de poussée est, lors de l'atterrissage d'un aéronef, d'améliorer la capacité de freinage de celui-ci en redirigeant vers l'avant au moins une partie de l'air éjecté du turboréacteur.

Dans cette phase, l'inverseur obstrue au moins une partie de la veine du flux froid et dirige ce flux vers l'avant de la nacelle, générant de ce fait une contrepoussée qui vient s'ajouter au freinage des roues et aérofreins de l'avion.

De manière générale, la structure d'un inverseur comprend un capot d'inverseur déplaçable entre, d'une part, une position de jet inversé dans laquelle il ouvre dans la nacelle un passage destiné au flux d'air dévié, et d'autre part, une position de jet direct dans laquelle il ferme ce passage.

Dans le cas d'un inverseur à grilles de déviation, également appelées grilles ou cascades d'inverseur de poussée, la réorientation du flux d'air est effectuée par des grilles de déviation, associées à des volets d'inversion venant bloquer au moins partiellement la veine de circulation d'air, le capot n'ayant qu'une simple fonction de coulissage visant à découvrir ou recouvrir ces grilles d'inverseur de poussée.

De façon connue, les grilles d'inverseur de poussée sont montées sur au moins un cadre d'extrémité transmettant la contre poussée fournie par les aubages à l'ensemble de la structure d'inversion de poussée elle-même rattachée à l'ensemble propulsif comprenant le turboréacteur.

Cependant, les grilles d'inverseur de poussée élaborées selon les procédés de fabrication connus de drapage de tissus pré-imprégnés autour d'outillages sont assez fragiles par la constitution de stratifiés sujets au délaminage. Elles sont également chères.

Il existe également des procédés de fabrication utilisant des matériaux à fibres courtes ou discontinues aléatoirement distribuées et thermo compressées ou injectée, comme décrit dans le brevet US2016186689.

Ce document décrit une grille d'inverseur de poussée fabriquée par co-consolidation de raidisseurs incluant les brides de fixation pré-consolidés et d'aubes pré-consolidées. Les raidisseurs sont constitués d'un polymère renforcé de fibres continues et les aubes d'une résine thermoplastique renforcée de fibres discontinues.

Cependant, ces procédés de l'art antérieur fournissent des caractéristiques mécaniques très limitées, nuisant à la performance aérodynamique des grilles et à leur légèreté.

La présente invention vise à résoudre tout ou partie de ces inconvénients en proposant une grille d'inverseur de poussée pour nacelle de turboréacteur d'aéronef fournissant des caractéristiques mécaniques élevées et de bonnes performances aérodynamiques tout en permettant de réaliser des géométries complexes.

L'invention concerne une grille d'inverseur de poussée pour nacelle d'aéronef comprenant une pluralité d'aubes présentant une première et une deuxième surface. Les aubes sont reliées à des longerons qui sont raccordés à des brides de fixation destinées à la fixation de la grille d'inverseur de poussée sur la nacelle.

Selon l'invention, au moins l'une des surfaces aérodynamiques des aubes est tapissée d'au moins une nappe de fibres comprenant une pluralité de morceaux de fibres imprégnées de résines. Les morceaux de fibres sont superposés les uns sur les autres, positionnés parallèlement à la surface aérodynamique de l'aube, parallèlement les uns par rapport aux autres et orientés selon différentes directions.

Les surfaces aérodynamiques des aubes correspondent aux surfaces léchées par l'écoulement de l'air lors de l'utilisation de l'inverseur de poussée c'est-à-dire les surfaces d'intrados et d'extrados de ces aubes.

Avantageusement, les aubes sont entièrement constituées d'au moins une nappe de fibres sur toute leur épaisseur. En d'autres termes, les aubes sont entièrement constituées de morceaux de fibres, c'est-à-dire qu'elles comprennent des morceaux de fibres sur toute leur épaisseur. Ainsi, dans une telle configuration, au moins une nappe de fibres délimite au moins localement l'épaisseur de l'aube. En effet, les aubes peuvent être formées sur toute leur épaisseur d'un aggrégat de morceaux de fibres superposés ou bien selon une autre configuration, d'une préforme élémentaire ou coeur de morceaux de fibres formant une première nappe de fibre utilisée comme support pour être ensuite recouverte dans un second temps de nappes de fibres sur ses surfaces aérodynamiques.

Avantageusement, les aubes sont reliées aux longerons, par des zones de raccordement formées de nappes de fibres disposées de manières continues sur au moins la jonction desdites aubes avec les longerons adjacents associés, au moins des aubes aux zones de jonction desdites aubes avec les longerons adjacents associés.

Les zones de raccordement d'une aube et d'un longeron adjacent sont formées par le prolongement d'au moins une nappe de fibres de ladite aube sur une portion de longeron adjacente. Les morceaux de fibres sont superposés les uns sur les autres, positionnés parallèlement à la surface aérodynamique des zones de raccordement et orientés selon différentes directions.

Selon une caractéristique technique particulière, les longerons et/ou les brides de fixations comprennent au moins en surface et au moins localement des nappes de fibres 7.

Dans une configuration particulière, les longerons et/ou les brides de fixations sont entièrement formés de nappe(s) de fibres, c'est-à-dire qu'ils sont constitués d'au moins une nappe de fibres sur toute leur épaisseur.

Alternativement et de manière préférée, les longerons et/ou les brides de fixations sont formées par une combinaison entre un matériau composite à fibres continues et au moins une nappe de fibres disposée au moins localement en surface, cette nappe de fibres comprenant des morceaux de fibres superposés les uns sur les autres, positionnés parallèlement et orientés selon différentes directions.

Selon une caractéristique technique particulière, les brides de fixation sont majoritairement (c'est-à-dire plus de 50%), voire entièrement, constituées de morceaux de fibres superposés les uns sur les autres formant nappe(s), positionnés parallèlement aux surfaces de brides et aux surfaces voisines ainsi que les surfaces de raccordement avec les brides et orientés selon différentes directions.

Selon une caractéristique technique avantageuse, les aubes présentent une épaisseur variable.

De préférence, l'épaisseur d'une aubes varie d'un rapport entre 1 et 15 fois son épaisseur la plus faible, ceci permettant de créer des profils aérodynamiques performants. L'épaisseur varie suivant la direction du flux d'air, c'est-à-dire d'un bord d'attaque jusqu'à un bord de fuite de l'aube.

Selon une variante, le taux de fibres est supérieur à 50% du volume total du matériau composite formé par les nappes de fibres.

Selon une autre variante, le taux de fibres est de l'ordre de 60% du volume total du matériau composite formé par les nappes de fibres.

Selon une autre variante, les morceaux de fibres présentent une épaisseur comprise entre 0,1 mm et 0,4 mm, une longueur comprise entre 15 mm et 60 mm et une largeur comprise entre 10 mm et 40 mm.

Selon une autre variante, les morceaux de fibres comprennent des fibres tissées pour former des matelas de morceaux de fibres tissé pré-imprégnés de résine.

Selon une variante, la résine faisant office de matrice enrobant les fibres et consolidant la grille est une résine thermodure. De préférence, les fibres sont emprisonnées dans une matrice thermodure telle que de la famille des époxydes, des benzoxiasines, des polyesters, des bismaléimides.

Selon une autre variante, la résine peut être une résine thermoplastique. De préférence dans ce cas, les fibres sont emprisonnées dans une ou des matrices thermoplastiques telles que de la famille des polyamides, polypropylènes, polyétherimides (PEI), polyéthersulfones (PES), poly(sulfures de phénylène) (PPS), polyaryléthercétones (PAEK), polyétheréthercétones (PEEK), polyéthercétonecétones (PEKK).

L'invention fournit ainsi une grille d'inverseur de poussée pour nacelle de turboréacteur d'aéronef présentant des caractéristiques mécaniques élevées et de bonnes performances aérodynamiques.

Elle permet également de réaliser des géométries complexes et est moins chère que celles de l'art antérieur.

Il est en effet possible de faire varier plus facilement la forme de l'aube (en forme de « C « ou de « U » par exemple), celle de ses bords d'attaque (arrondis ou avec arêtes vives) et l'épaisseur de l'aube d'un bord à l'autre.

Ceci permet de créer des profils aérodynamiques performants.

D'autres caractéristiques et avantages de l'invention ressortiront à la lecture de la description qui suit, donnée uniquement à titre d'exemple, en référence à:
- la figure 1 représentant une grille d'inverseur de poussée selon un mode de réalisation de l'invention ;
- la figure 2 représentant en détail une portion d'aube comprenant une nappe de fibres constituée d'un empilement ou superposition de morceaux de fibres ;
- la figure 3 représentant une zone de raccordement entre une aube et un longeron ;
- la figure 4 représentant une forme d'aube selon un mode de réalisation possible ;
- la figure 5 représentant une forme d'aube selon un autre mode de réalisation possible ;
- la figure 6 représentant un exemple de raccordement entre une bride de fixation et une aube ;
- la figure 7 représentant une aube dans laquelle une alvéole sur deux est entourée de nappes de fibres ;
- la figure 8 représentant des aubes avec un retour en forme de U sur les longerons ;
- la figure 9 représentant plusieurs façons de réaliser les brides de fixation.

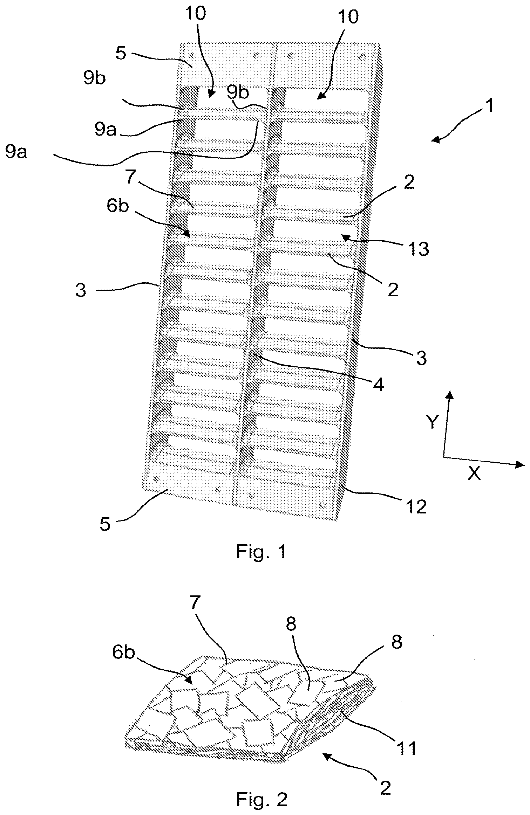

La figure 1 représente une grille d'inverseur de poussée 1 pour nacelle d'aéronef selon un mode de réalisation de l'invention.

La grille d'inverseur de poussée 1 comprend une pluralité d'aubes 2 reliées à des longerons 3, 4. Les longerons 3, 4 sont reliés à des brides de fixation 5 destinées à la fixation de la grille d'inverseur de poussée 1 sur la nacelle.

La grille d'inverseur de poussée 1 peut être une grille à flux droit ou dévié :
- la grille 1 de contrepoussée dite « droite » comprend des aubes 2 aérodynamiques, aussi appelées aubages, et des longerons 3 sensiblement plans sans portance aérodynamique : la poussée aérodynamique des aubages 2 étant orientée dans un plan radial longitudinal à la grille 1 ;
- dans le cas d'une grille 1 de contrepoussée dite « déviée », soit les aubages 2 développent une contrepoussée déviée en direction radiale par rapport à la grille 1 et les longerons 3 restent sensiblement plans, soit les aubages 2 développent une contrepoussée longitudinale et les longerons 3 sont formés pour développer une contrepoussée latérale, la somme des deux fournissant une contrepoussée déviée.

A titre d'exemple, la figure 1 représente une grille de contre poussée dite « droite ».

Le nombre de longerons, dès lors qu'il y en a au moins un, n'est pas limitatif. Généralement, les aubes 2 sont disposées en échelle entre, et/ou de part et d'autre, des longerons 3. Les aubes 2 peuvent également être disposées d'un seul côté d'un longeron 3.

Par ailleurs, il est possible d'utiliser des grilles 1 n'ayant que deux longerons cadres, et on peut avoir aussi des grilles ayant jusque sept voire quinze longerons 3.

Plus précisément et selon ce mode de réalisation particulier, les aubes 2 sont disposées parallèlement les unes par rapport aux autres da ns une même rangée 10 entre deux longerons 3, 4, de la grille 1.

Les aubes 2 comprennent des surfaces 6a, 6b qui sont disposées parallèlement aux surfaces aérodynamiques et constituent respectivement la surface intrados et la surface extrados de l'aube 2. La surface « intrados » désigne la surface intérieure de l'aube 2, à savoir la surface orientée vers la veine de flux froid lors de son utilisation, tandis que la surface « extrados » désigne la surface extérieure de l'aube opposée à la surface intrados et orientée principalement vers l'extérieur de la nacelle lors de son utilisation.

Les longerons 3, 4 s'étendent suivant une direction longitudinale Y, sensiblement perpendiculaire à une direction transversale X parallèle à celle des aubes 2.

La grille d'inverseur de poussée 1 comprend deux longerons latéraux 3 et un longeron central 4, séparant deux rangées 10 d'aubes 2. Les aubes 2 d'une rangée 10 sont parallèles entre elles et alignées.

Une rangée d'aube 10 est entourée par un longeron latéral 3 et par un longeron central 4.

Les brides de fixation 5 s'étendent suivant la direction transversale X et sont disposées de part et d'autre des rangées d'aubes 10. Deux aubes 2 peuvent être intégrées à une bride de fixation 5.

Les deux longerons latéraux 3 et les deux brides de fixation 5 forment un cadre périphérique 12 entourant les aubes 2.

La grille d'inverseur de poussée 1 comprend en option des attaches ou moyens de fixation (non représentées) le long des deux longerons latéraux 3.

Les aubes 2 canalisent le flux d'air et le dévient selon la direction longitudinale Y en produisant une poussée sur les aubes 2.

Les longerons 3, 4 canalisent le flux d'air et le dévient éventuellement dans la direction transversale X.

L'ensemble des efforts aérodynamiques appliqués sur les aubes 2 et les longerons 3, 4 sont collectés dans le cadre périphérique 12 et transmis à la structure de l'inverseur via des attaches sur les brides de fixation 5.

Selon l'invention, au moins la surface 6a, 6b des aubes 2 est tapissée de nappes de fibres 7 comprenant chacune une pluralité de morceaux de fibres 8 pré-imprégnées de résines, comme illustré sur la figure 2. En d'autres termes, une nappe de fibres 7 est formée par un agrégat et une superposition de morceaux de fibres 8 comprenant au moins une couche de morceaux de fibres sur son épaisseur.

Les morceaux de fibres 8 sont superposés les uns sur les autres, positionnés selon des surfaces sensiblement parallèles les unes par rapport aux autres et orientés selon différentes directions, c'est-à-dire dont les fibres ont dans ces surfaces des directions différentes par rapport aux directions des fibres du ou des morceau(x) voisin(s). Les morceaux de fibres 8 sont superposés les uns sur les autres tout en étant décalés les uns par rapport aux autres.

Les morceaux de fibres 8 forment des chips de fibres discontinues, unidirectionnelles et/ou tissées, disposées selon des directions parallèles aux surfaces des éléments constituant la grille d'inverseur de poussée 1 et surtout parallèlement aux surfaces aérodynamiques de la grille 1.

Plus précisément, et dans une configuration préférée, un morceau de fibres forme une lamelle, ou lamelle de fibres, délimitée en périphérie par au moins un bord périphérique formant un contour fermé du morceau 8, chaque fibre d'un morceau 8 s'étendant de préférence sans discontinuité d'un bord à l'autre du bord périphérique en le traversant sur sa largeur.

De préférence, les aubes 2 sont entièrement constituées de nappes de fibres 7, c'est-à-dire que le coeur 11 et la surface 6a, 6b des aubes 2 comprennent des nappes de fibres 7.

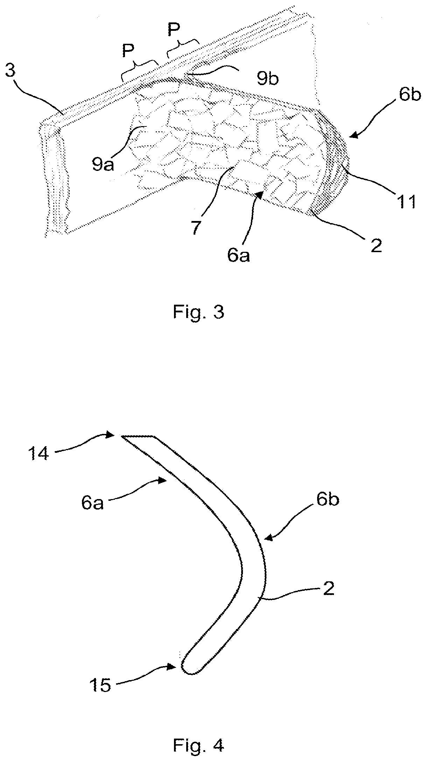

Comme représenté sur la figure 3, les aubes 2 sont reliées aux longerons 3, 4 par des zones de raccordement 9a, 9b formées de nappes de fibres 7. Les zones de raccordement 9a, 9b sont avantageusement entièrement formées de nappes de fibres 7.

Les zones de raccordement 9a, 9b prolongent les aubes 2 et recouvrent une portion P des longerons 3, 4. La surface 6a, 6b des aubes 2 se prolongent ainsi sur la surface des longerons 3, 4.

Les zones de raccordement 9a, 9b sont formées par une épaisseur de morceaux de fibres 8.

Les zones de raccordement 9a, 9b présentent une forme incurvée et forment des ponts de matière entre les aubes 2 et les longerons 3, 4 renforçant leur solidarisation.

Les zones de raccordement 9a, 9b permettent de fixer l'aube 2 aux longerons 3, 4 tout en prolongeant la surface aérodynamique des aubes 2. Il y a donc continuité de la surface aérodynamique.

Selon cet exemple, chaque aube 2 est prolongée par quatre zones de raccordement 9a, 9b.

En effet, chaque aube 2 est prolongée par deux premières zones de raccordement 9a disposées à chaque extrémité de l'aube 2 pour raccorder un même côté de l'aube 2, ici côté intrados, aux longerons 3, 4 adjacents de part et d'autre de ladite aube 2, étant donné qu'une aube 2 est raccordée à deux longerons 3, 4 parallèles entre eux.

De même, chaque aube 2 est prolongée par deux deuxièmes zones de raccordement 9b disposées à chaque extrémité de l'aube 2, et opposées aux deux premières zones de raccordement9a, pour raccorder un même côté de l'aube 2, ici le côté extrados, aux longerons 3, 4 adjacents.

Les zones de raccordement 9a, 9b ont pour fonction de fixer les aubes 2 aux longerons 3, 4. Ils fournissent une fixation renforcée par rapport à ce qui est connu.

Les longerons 3, 4 et/ou les brides de fixation 5 sont tapissés de nappes de fibres 7.

Selon une configuration possible, les longerons 3, 4 et/ou les brides de fixation 5 sont entièrement constitués de nappes de fibres 7, sur toute leur épaisseur.

Selon une autre variante, les longerons 3, 4 et/ou les brides de fixation 5 comprennent une âme constituées de fibres continues, les fibres étant des fibres unidirectionnelles et/ou des fibres tissées, les âmes des longerons 3, 4 étant partiellement ou totalement recouvertes par les nappes de fibres 7 discontinus provenant des aubes 2 et qui s'étendent ou se prolongent dans la partie du longeron 3, 4 exposée dans une alvéole 13 de la grille 1 (couvrant partiellement ou totalement cette surface).

La grille d'inverseur de poussée 1 comprend des alvéoles 13 délimitées par deux aubes 2 et des parties de longerons 3, 4.

Selon un mode de réalisation préféré, les nappes de fibres 7 entourent systématiquement chaque alvéole 13 de la grille d'inverseur de poussée 1 et assurent une continuité matière dans les zones de raccordement 9a, 9b des aubes 2 avec les longerons 3, 4.

Dans une alvéole 13 de la grille 1, les nappes de fibres 7 tapissent les surfaces de façon continue, et en particulier : la surface 6b de la première aube 2 la plus en avant ou en amont de l'alvéole 13 par rapport à la grille 1, la surface de raccordement 9b vers l'un des longerons 3, 4, la surface dudit longeron en regard de l'alvéole 13 associée et adjacent à l'extrémité de l'aube 2, la surface de la zone de raccordement 9a de la seconde aube 2 délimitant l'alvéole 13, la surface 6a de cette seconde aube 2 en aval de l'alvéole 13 par rapport à la grille 1, la surface de la zone de raccordement 9a à l'autre extrémité de la seconde aube, la surface du longeron adjacent associé, la surface de la zone de raccordement 9b à la surface 6b de l'aube amont de l'alvéole 13.

Chaque aube 2 comprend une surface concave 6a et une surface convexe 6b qui sont toutes les deux recouvertes uniformément de nappes de fibres 7. La surface concave 6a est destinée à être orientée globalement vers l'amont de la nacelle lors de son utilisation, lorsque la grille 1 est fixée sur la nacelle.

La grille d'inverseur de poussée 1 est réalisée en matériau(x) composite(s) constitué(s) de fibres liées par une matrice organique (résine thermodurcissable telle que époxy, benzoxasine, ou BMI ou similaire, ou résine thermoplastique telle que polyamides, polypropylene, PEI, PEEK, PAEK ou similaire).

Préférentiellement le taux volumique de fibres du matériau composite est supérieur à 50% du volume total du composite. Préférentiellement, il est supérieur à 55% du volume total du composite.

Avantageusement, le taux volumique de fibres est de l'ordre de 60% du volume total du composite.

Les morceaux de fibres 8 peuvent être des chips de fibres unidirectionnelles ou de fibres tissées, constitués de fibres de carbone ou de verre ou d'aramide ou un mélange de ces matériaux ou autres.

Les morceaux de fibres 8 sont majoritairement organisés en couches minces d'épaisseur comprise entre 0,1 mm et 0,4 mm (soit équivalent à 0,15 kg/m² à 0,5kg/m²).

Les morceaux de fibres 8 sont de formes circulaires ou ovoïdes ou encore polygonales.

Les morceaux de fibres 8 présentent une largeur comprise entre 10 mm et 40 mm et une longueur comprise entre 15 mm et 60 mm.

Les morceaux de fibres 8 sont disposés suivant des directions aléatoires et leurs plus grandes dimensions sont disposées selon des lignes parallèles aux surfaces externes de la grille d'inverseur de poussée 1 constituée de nappes de fibres 7, telle la surface 6a, 6b d'une aube 2.

Ainsi les morceaux de fibres 8 sous forme de copeaux allongés, superposés et croisés, tapissent de façon continue les surfaces 6a, 6b des aubes 2, au moins une partie des surfaces des longerons 3, 4 ainsi que les zones de raccordement 9a, 9b entre aubes 2 et longerons 3, 4.

En variante, les morceaux de fibres 8 comprennent des fibres tissées pouvant être du taffetas, sergés ou satins.

Lorsque la résine est une résine thermodurcissable, le procédé de fabrication de la grille d'inverseur de poussée 1 comprend une étape de thermo compression dans un moule.

Selon d'autres variantes, l'ensemble des nappes de fibre 7 qui recouvrent au moins une des surfaces de chacune des aubes 2 se prolongent sur, et recouvrent, au moins une portion P des longerons 3, 4 associés. En d'autres termes, les raccordements des nappes de fibres 7 des aubes 2 se raccordent sur une face du longeron 3, 4 ce qui permet lorsque les formes aérodynamiques et que les poussées aérodynamiques développées l'autorisent, de simplifier le mode de disposition des nappes de fibres 7 sur les aubes 2 et les raccordements avec les longerons 3, 4.

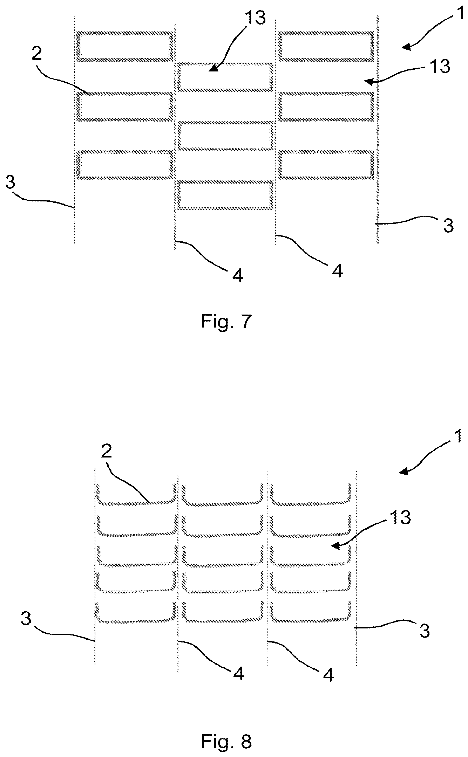

Selon une première variante représentée sur la figure 7, une alvéole 13 sur deux est entourée, du côté intérieur c'est-à-dire en regard de l'espace intérieur qu'elle délimite, de nappes de fibres 7. Les alvéoles 13 entourées de nappes de fibres 7 sont réparties de manière homogène sur l'ensemble de la grille 1, en particulier ici, cesdites alvéoles entourées de nappes de fibres sont disposées en quinconce.

Selon une autre variante représentée sur la figure 8, les aubes 2 présentent un retour de nappes de fibres en forme de « U » sur les longerons 3, 4 adjacents. Pour garantir une homogénéité du renfort structural créé par les nappes de fibres 7, ces retours de nappes de fibres 7 en forme de « U » sont disposées de sorte à couvrir les mêmes surfaces 6a, 6b des aubes 2 sur toute la grille 1, par exemple les surfaces intrados ou les surfaces extrados de chacune des aubes 2. En d'autres termes, les surfaces 6a, 6b des aubes 2 sont tapissées de nappes de fibres 7 qui se prolongent de part et d'autre de chacune des aubes 2 sur les longerons adjacents, présentant alors, au niveau de chacune des alvéoles 13, une forme de « U ». Dans cette configuration, il est préféré que ces nappes de fibres recouvrent en particulier les mêmes surfaces 6a, 6b des aubes 2 sur toute la grille 1 pour homogénéiser le renfort structural assuré par lesdites nappes de fibres 7.

Selon une variante de la figure 8, les retours en forme de « U » au niveau des longerons 3, 4 ne couvrent qu'une partie du côté du longeron de l'alvéole 13.

Selon une variante (non représentée) alternative ou complémentaire, les retours en forme de « U » au niveau des longerons 3, 4 sont prolongés jusqu'à la base de l'aube suivante couvrant ainsi tout le côté du longeron de l'alvéole 13 concernée. Cette variante favorise le remplissage de raccordement de forme de l'aube amont avec le longeron sans nécessiter la pose d'une nappe de fibre 7 supplémentaire.

La figure 4 représente une coupe transversale d'une aube 2 le long du sens de la corde de profil incurvé en forme de « C » selon un mode de réalisation possible. Cette aube 2 comprend dans le sens de profil de corde deux bords d'extrémités, l'un 15 formant bord d'attaque et l'autre 14 formant bord de fuite.

Selon une première variante l'un ou les deux bords d'extrémité présentent une arrête sensiblement vive avec un plat comme le montre le repère 14 de la figure 4. Selon une autre variante l'arête sensiblement vive constitue l'extrémité de la face intrados et extrados sans bord plat.

Selon une autre variante l'un ou les deux bords d'extrémité présentent une forme arrondie comme le montre le repère 15 de la figure 4.

L'aube 2 de la figure 4 présente une épaisseur constante.

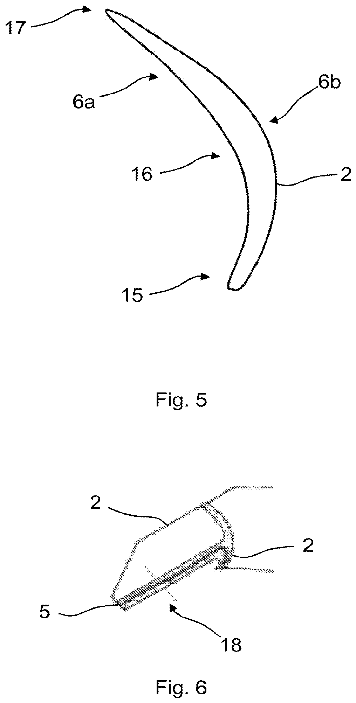

Selon une autre variante représentée sur la figure 5, l'aube 2 peut présenter une épaisseur variable le long de la corde.

Dans cet exemple, l'épaisseur de l'aube 2 est plus importante dans une zone centrale 16 de l'aube 2 prise entre ses deux extrémités, qu'à ses bords d'attaque 15.

De préférence, l'épaisseur des aubes 2 varie le long de la corde de l'aube d'un rapport entre 1 et 15 fois son épaisseur minimale, c'est à dire la plus faible, ceci permettant de créer des profils aérodynamiques performants.

Selon un mode de réalisation particulier d'une aube à épaisseur variable le long de la corde et pour une longueur de corde comprise entre 30 et 60mm de long, l'épaisseur peut varier, d'environ 0,6 mm au niveau du bord attaque présentant un rayon de courbure d'environ 0,3 mm si celui-ci est arrondi, évoluant rapidement à une épaisseur de 1 mm puis s'accroissant jusqu'à une épaisseur maximale d'environ 3 ou 4 mm, et diminuant enfin entre 0,3 et 0,5mm au voisinage du bord de fuite.

L'aube 2 présente dans ce mode de réalisation un bord de fuite profilé 17 et un bord d'attaque 15 arrondi.

Les pièces produites en utilisant des morceaux de fibres 8 pré-imprégnés peuvent aisément comporter des épaisseurs évolutives grâce au procédé de moulage par thermocompression pendant lequel, grâce à la discontinuité des fibres entre les morceaux de fibres 8, chacun des morceaux peut bouger par rapport aux morceaux voisins et faciliter le remplissage d'épaisseur évolutive.

Les rayons de raccordement entre aubes 2 et longerons 3, 4 sont variables en fonction de la position le long de la corde, permettant d'adapter la quantité de matière au transfert d'efforts.

Autrement dit, les zones de raccordement 9a, 9b présentent des formes et épaisseurs variables.

La hauteur des longerons 3, 4 peut être différente de la corde des aubes 2.

Comme représenté sur la figure 6, la bride de fixation 5 peut être raccordée sur n'importe quelle partie des aubes 2. La bride de fixation 5 comprend un orifice 18 dans lequel vient se loger ou se visser un élément de fixation telle une vis.

Les brides de fixation 5 peuvent être dans les plans ou des surfaces particulières se raccordant en bords ou en milieu de longerons 3, 4 ou de cadre périphérique 12.

Les aubes 2 ou aubages ne sont pas nécessairement perpendiculaires aux longerons 3, 4.

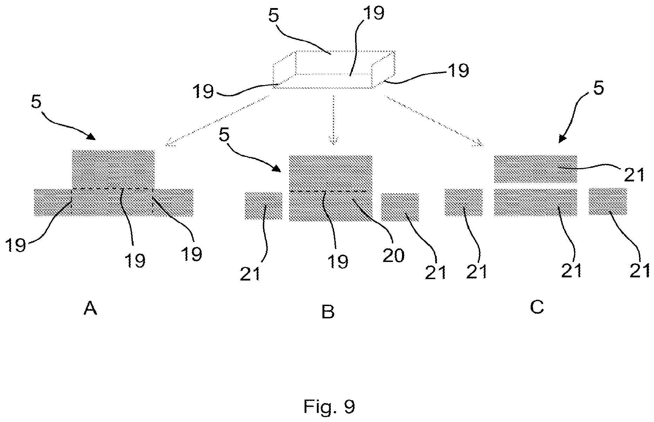

Le tapissage des brides de fixation 5 peut être réalisé de plusieurs configurations, comme représenté sur la figure 9 avec les trois modes de réalisation différents A, B et C.

Le tapissage d'extrémité des brides de fixation 5 est réalisé par des barquettes « en coin de valise », c'est-à-dire agencées pour recouvrir au moins trois arêtes 19 de la bride de fixation 5. Il peut s'agir d'arêtes successives pour recouvrir un bord avec les angles qui le délimitent, comme illustré sur la figure 9, ou bien d'arêtes concomitantes ensemble formant un angle ou coin, comme par exemple le point de réunion de trois arêtes sensiblement perpendiculaires les unes par rapport aux autres.

Selon un premier procédé de réalisation A de la figure 9 montrant une bride de fixation 5 dépliée, les nappes de fibres 7 constituent un tapissage continu. Une fois la bride de fixation 5 pliée « en coin de valise », les nappes de fibres 7 recouvrent de façon continue trois des arêtes 19 de la bride de fixation 5.

Selon un deuxième procédé de réalisation B de la figure 9, la bride de fixation 5 comprend une portion pliable 20 ayant une arête 19 et deux ailettes 21 qui se raccordent à la portion pliable 20 lorsqu'elle est pliée.

Selon un troisième procédé de réalisation C de la figure 9, la bride de fixation 5 comprend quatre ailettes 21 constituées de nappes de fibres 7 qui sont raccordées ensembles par des nappes de fibres 7.

Selon une variante, au croisement entre aube 2 et longeron 3, 4 ou aube 2 et bride de fixation 5 ou longeron 3, 4 et bride de fixation 5, des amas de fibres sous forme de « tête de clou » peuvent être insérés pour favoriser le remplissage du volume tout en maintenant les morceaux de fibres les plus parallèles aux surfaces externes des pièces.

Selon une autre variante alternative ou complémentaire, des tapis ou couches de fibres continues unidirectionnelles et ou tissées peuvent être disposées sur des longues surfaces telles que sur toute la longueur des longerons 3, 4.

Les brides de fixation 5 peuvent aussi présenter des épaisseurs variables (bossages) permettant de limiter la masse globale tout en adaptant les épaisseurs, par exemples autour des fixations.

Des matériaux fonctionnels peuvent être introduits localement tels que du tissu de verre en tant qu'isolant galvanique entre composites carbones et pièce voisine ou un film plastique spécifique antifriction, ou autre, ou un insert métallique.

L'invention concerne également un procédé de fabrication d'une grille d'inverseur de poussée 1, qui n'est pas revendiqué.

Le procédé comprend une étape préalable de réalisation d'une préforme élémentaire d'aubes 2, de longerons 3, 4 et de brides de fixation 5.

Les préformes élémentaires sont entièrement constituées de nappes de fibres 7. Les préformes élémentaires peuvent être réalisées par drapage.

Les préformes élémentaires sont ensuite tapissées de nappes de fibres 7 pour former la grille d'inverseur de poussée 1 et notamment de façon à assurer une continuité de la surface aérodynamique des éléments constituant la grille d'inverseur de poussée 1.

Une étape de thermocompression est ensuite appliquée pour plaquer les morceaux de fibres 8 formant nappes de fibres 7 sur les surfaces des préformes élémentaires et les faire fluer de manière à se conformer à la géométrie de la préforme élémentaire.

Selon un autre procédé possible, le procédé de fabrication ne comprend pas d'étape de réalisation de préformes élémentaires.

Les éléments constituant la grille d'inverseur de poussée 1 sont directement obtenus par recouvrement et empilement des morceaux de fibres 8 les uns sur les autres et au fur et à mesure. L'épaisseur de l'élément de la grille d'inverseur de poussée 1 augmente petit à petit et au fur et à mesure de son recouvrement par les couches de morceaux de fibres 8 formant nappes de fibres 7.

Le procédé de fabrication comprend ensuite une étape de thermoformage.

L'invention est décrite dans ce qui précède à titre d'exemple. Il est entendu que l'homme du métier est à même de réaliser différentes variantes de réalisation de l'invention sans pour autant sortir du cadre de l'invention.

## Revendications

1. Grille d'inverseur de poussée (1) pour nacelle d'aéronef comprenant une pluralité d'aubes (2) présentant une première (6a) et une deuxième surface (6b), lesdites aubes (2) étant reliées à des longerons (3, 4) raccordés à des brides de fixation (5) destinées à la fixation de la grille d'inverseur de poussée (1) sur la nacelle, où.
- au moins une des surfaces (6a, 6b) des aubes (2) est tapissée d'au moins une nappe de fibres (7) comprenant une pluralité de morceaux de fibres (8) pré-imprégnées de résines, lesdits morceaux de fibres (8) étant superposés les uns sur les autres, positionnés parallèlement à la surface aérodynamique de l'aube (2) et orientés selon différentes directions, et **caractérisée en ce que** les aubes (2) sont reliées aux longerons (3,4), par des zones de raccordement (9a, 9b) formées de nappes de fibres (7) disposées de manières continues au moins des aubes (2) aux zones de jonction (9a, 9b) desdites aubes avec les longerons adjacents associés, les zones de raccordement (9a, 9b) d'une aube (2) et d'un longeron (3, 4) adjacent étant formées par le prolongement d'au moins une nappe de fibres (7) de ladite aube (2) sur une portion (P) de longeron (3, 4) adjacente.

2. Grille d'inverseur de poussée (1) selon la revendication précédente, **caractérisée en ce que** les aubes (2) sont constituées de nappes de fibres (7) sur toute leur épaisseur.

3. Grille d'inverseur de poussée (1) selon l'une quelconque des revendications 1 et 2, **caractérisée en ce que** les longerons (3, 4) et/ou les brides de fixation (5) sont constitués d'au moins une nappe de fibres (7) sur toute leur épaisseur, lesdits morceaux de fibres (8) étant superposés les uns sur les autres, positionnés parallèlement à la surface aérodynamique des longerons (3, 4) et des brides de fixation (5) et orientés selon différentes directions.

4. Grille d'inverseur de poussée (1) selon l'une quelconque des revendications 1 à 3, **caractérisée en ce que** les longerons (3, 4) et/ou les brides de fixations (5) sont formées par une combinaison entre un matériau composite à fibres continues et au moins une nappe de fibres (7) disposée au moins localement en surface, cette nappe de fibres (7) comprenant des morceaux de fibres (8) superposés les uns sur les autres, positionnés parallèlement et orientés selon différentes directions

5. Grille d'inverseur de poussée (1) selon l'une quelconque des revendications 1 à 4, **caractérisée en ce que** les aubes (2) présentent une épaisseur variable.

6. Grille d'inverseur de poussée (1) selon la revendication 5, **caractérisée en ce que** l'épaisseur des aubes (2) varie varie le long de la corde de l'aube d'un rapport entre 1 et 15 fois son épaisseur minimale.

7. Grille d'inverseur de poussée (1) selon l'une quelconque des revendications 1 à 6, **caractérisée en ce qu'**elle comprend une pluralité d'alvéoles (13), chacune délimitée par deux aubes (2) et des parties de longerons (3, 4), une alvéole (13) sur deux étant entourée de nappes de fibres (7), cesdites alvéoles entourées de nappes de fibres étant de préférence disposées en quinconce.

8. Grille d'inverseur de poussée (1) selon l'une quelconque des revendications 1 à 6, **caractérisée en ce que** les aubes (2) présentent un retour de nappes de fibres (7) en forme de « U » sur les longerons (3, 4) adjacents, ces retours de nappes de fibres (7) en forme de « U » étant disposées de sorte à couvrir les mêmes surfaces (6a, 6b) des aubes (2) sur toute la grille (1).

9. Grille d'inverseur de poussée (1) selon l'une quelconque des revendications précédentes, **caractérisée en ce que** le taux de fibres est supérieur à 50% du volume total du matériau composite formé par les nappes de fibres (7).

10. Grille d'inverseur de poussée (1) selon la revendication 9, **caractérisée en ce que** le taux de fibres est de l'ordre de 60% du volume total du matériau composite formé par les nappes de fibres (7).

11. Grille d'inverseur de poussée (1) selon l'une quelconque des revendications précédentes, **caractérisée en ce que** les morceaux de fibres (8) présentent une épaisseur comprise entre 0,1 mm et 0,4 mm, une longueur comprise entre 15 mm et 60 mm et une largeur comprise entre 10 mm et 40 mm.

12. Grille d'inverseur de poussée (1) selon l'une quelconque des revendications précédentes, **caractérisée en ce que** les morceaux de fibres (8) comprennent des fibres tissées pour former des matelas de morceaux de fibres tissé pré-imprégnés de résine.

13. Grille d'inverseur de poussée (1) selon l'une quelconque des revendications 1 à 12, **caractérisée en ce que** les fibres sont emprisonnées dans une matrice thermodure telle que de la famille des époxydes, des benzoxasines, des polyesters, des bismaléimides.

14. Grille d'inverseur de poussée (1) selon l'une quelconque des revendications 1 à 12 **caractérisée en ce que** les fibres sont emprisonnées dans une ou des matrices thermoplastiques telles que de la famille des polyamides, polypropylènes, PEI, PES, PPS, PAEK, PEEK, PEKK.

## Patentansprüche

1. Schubumkehrerkaskade (1) für eine Flugzeuggondel, die eine Vielzahl von Schaufeln (2) umfasst, die eine erste (6a) und eine zweite Fläche (6b) aufweisen, wobei die Schaufeln (2) mit Längsträgern (3, 4) verbunden sind, die an Befestigungsflansche (5), die zur Befestigung der Schubumkehrerkaskade (1) an der Gondel bestimmt sind, angeschlossen sind, wobei
- mindestens eine der Flächen (6a, 6b) der Schaufeln (2) mit mindestens einem Faservlies (7) bezogen ist, das eine Vielzahl von mit Harzen vorimprägnierten Faserstücken (8) umfasst, wobei die Faserstücke (8) übereinanderliegen, parallel zur aerodynamischen Fläche der Schaufel (2) positioniert und in unterschiedlichen Richtungen ausgerichtet sind, und **dadurch gekennzeichnet, dass**
die Schaufeln (2) über Anschlussbereiche (9a, 9b), die von Faservliesen (7) gebildet werden, welche zusammenhängend mindestens von den Schaufeln (2) bis zu den Übergangsbereichen (9a, 9b) der Schaufeln zu den zugehörigen angrenzenden Längsträgern angeordnet sind, mit den Längsträgern (3, 4) verbunden sind, wobei die Anschlussbereiche (9a, 9b) einer Schaufel (2) und eines angrenzenden Längsträgers (3, 4) von der Verlängerung mindestens eines Faservlieses (7) von der Schaufel (2) an einem Abschnitt (P) des angrenzenden Längsträgers (3, 4) gebildet werden.

2. Schubumkehrerkaskade (1) nach dem vorstehenden Anspruch, **dadurch gekennzeichnet, dass** die Schaufeln (2) über ihre gesamte Dicke aus Faservliesen (7) bestehen.

3. Schubumkehrerkaskade (1) nach einem der Ansprüche 1 und 2, **dadurch gekennzeichnet, dass** die Längsträger (3, 4) und/oder die Befestigungsflansche (5) über ihre gesamte Dicke aus mindestens einem Faservlies (7) bestehen, wobei die Faserstücke (8) übereinanderliegen, parallel zur aerodynamischen Fläche der Längsträger (3, 4) und der Befestigungsflansche (5) positioniert und in unterschiedlichen Richtungen ausgerichtet sind.

4. Schubumkehrerkaskade (1) nach einem der Ansprüche 1 bis 3, **dadurch gekennzeichnet, dass** die Längsträger (3, 4) und/oder die Befestigungsflansche (5) von einer Kombination zwischen einem Endlosfaserverbundmaterial und mindestens einem Faservlies (7) gebildet werden, das mindestens lokal an der Oberfläche angeordnet ist, wobei dieses Faservlies (7) übereinanderliegende, parallel positionierte und in unterschiedlichen Richtungen ausgerichtete Faserstücke (8) umfasst.

5. Schubumkehrerkaskade (1) nach einem der Ansprüche 1 bis 4, **dadurch gekennzeichnet, dass** die Schaufeln (2) eine variable Dicke aufweisen.

6. Schubumkehrerkaskade (1) nach Anspruch 5, **dadurch gekennzeichnet, dass** die Dicke der Schaufeln (2) entlang der Sehne der Schaufel um ein Verhältnis zwischen dem 1- und 15-Fachen ihrer minimalen Dicke variiert.

7. Schubumkehrerkaskade (1) nach einem der Ansprüche 1 bis 6, **dadurch gekennzeichnet, dass** sie eine Vielzahl von Kammern (13) umfasst, die jeweils von zwei Schaufeln (2) und Teilen von Längsträgern (3, 4) begrenzt werden, wobei jede zweite Kammer (13) von Faservliesen (7) umgeben ist, wobei diese von Faservliesen umgebenen Kammern vorzugsweise versetzt angeordnet sind.

8. Schubumkehrerkaskade (1) nach einem der Ansprüche 1 bis 6, **dadurch gekennzeichnet, dass** die Schaufeln (2) eine "U"-förmige Kehre von Faservliesen (7) an den angrenzenden Längsträgern (3, 4) aufweisen, wobei diese "U"-förmigen Kehren von Faservliesen (7) so angeordnet sind, dass sie über die gesamte Kaskade (1) dieselben Flächen (6a, 6b) der Schaufeln (2) bedecken.

9. Schubumkehrerkaskade (1) nach einem der vorstehenden Ansprüche, **dadurch gekennzeichnet, dass** der Faseranteil mehr als 50 % des Gesamtvolumens des von den Faservliesen (7) gebildeten Verbundmaterials beträgt.

10. Schubumkehrerkaskade (1) nach Anspruch 9, **dadurch gekennzeichnet, dass** der Faseranteil in der Größenordnung von 60 % des Gesamtvolumens des von den Faservliesen (7) gebildeten Verbundmaterials liegt.

11. Schubumkehrerkaskade (1) nach einem der vorstehenden Ansprüche, **dadurch gekennzeichnet, dass** die Faserstücke (8) eine Dicke im Bereich zwischen 0,1 mm und 0,4 mm, eine Länge im Bereich zwischen 15 mm und 60 mm und eine Breite im Bereich zwischen 10 mm und 40 mm aufweisen.

12. Schubumkehrerkaskade (1) nach einem der vorstehenden Ansprüche, **dadurch gekennzeichnet, dass** die Faserstücke (8) gewebte Fasern umfassen, um Matten aus mit Harz vorimprägnierten gewebten Faserstücken zu bilden.

13. Schubumkehrerkaskade (1) nach einem der Ansprüche 1 bis 12, **dadurch gekennzeichnet, dass** die Fasern in einer duroplastischen Matrix, wie etwa der Familie der Epoxide, Benzoxazine, Polyester, Bismaleimide, eingebettet sind.

14. Schubumkehrerkaskade (1) nach einem der Ansprüche 1 bis 12, **dadurch gekennzeichnet, dass** die Fasern in einer oder mehreren thermoplastischen Matrizen, wie etwa der Familie der Polyamide, Polypropylene, PEI, PES, PPS, PAEK, PEEK, PEKK, eingebettet sind.

## Claims

1. A thrust reverser cascade (1) for an aircraft nacelle comprising a plurality of blades (2) having a first (6a) and a second (6b) surfaces, said blades (2) being linked to spars (3, 4) connected to fastening flanges (5) intended for the fastening of the thrust reverser cascade (1) on the nacelle,
wherein
- at least one of the surfaces (6a, 6b) of the blades (2) is lined with at least one fibrous web (7) comprising a plurality of fiber pieces (8) pre-impregnated with resins, said fiber pieces (8) being superimposed on each other, positioned parallel to the aerodynamic surface of the blade (2) and oriented according to different directions, and **characterized in that**
the blades (2) are linked to the spars (3, 4), by connection areas (9a, 9b) formed by fibrous webs (7) disposed in a continuous manner at least from the blades (2) to the areas (9a, 9b) of junction of said blades with the associated adjacent spars,
the connection areas (9a, 9b) of a blade (2) and of an adjacent spar (3, 4) being formed by the extension of at least one fibrous web (7) of said blade (2) over a portion (P) of an adjacent spar (3, 4).

2. The thrust reverser cascade (1) according to the preceding claim, **characterized in that** the blades (2) are constituted by fibrous webs (7) across the entire thickness thereof.

3. The thrust reverser cascade (1) according to any one of claims 1 and 2, **characterized in that** the spars (3, 4) and/or the fastening flanges (5) are constituted by a least one fibrous web (7) across the entire thickness thereof, said fiber pieces (8) being superimposed on each other, positioned parallel to the aerodynamic surface of the spars (3, 4) and of the fastening flanges (5) and oriented according to different directions.

4. The thrust reverser cascade (1) according to any one of claims 1 to 3, **characterized in that** the spars (3, 4) and/or the fastening flanges (5) are formed by a combination of a composite material with continuous fibers and at least one fibrous web (7) disposed at least locally on surface, this fibrous web (7) comprising fiber pieces (8) superimposed on each other, positioned parallel to each other and oriented according to different directions.

5. The thrust reverser cascade (1) according to any one of claims 1 to 4, **characterized in that** the blades (2) have a variable thickness.

6. The thrust reverser cascade (1) according to claim 5, **characterized in that** the thickness of the blades (2) varies along the chord of the blade by a factor between 1 and 15 times its minimum thickness.

7. The thrust reverser cascade (1) according to any one of claims 1 to 6, **characterized in that** it comprises a plurality of cells (13), each delimited by two blades (2) and portions of spars (3, 4), one cell (13) out of two being surrounded by fibrous webs (7), said cells surrounded by fibrous webs preferably being disposed in a staggered manner.

8. The thrust reverser cascade (1) according to any one of claims 1 to 6, **characterized in that** the blades (2) have a « U »-shaped fold-back of fibrous webs (7) over the adjacent spars (3, 4), these « U »-shaped fold-backs of fibrous webs (7) being disposed so as to cover the same surfaces (6a, 6b) of the blades (2) over the entire cascade (1).

9. The thrust reverser cascade (1) according to any one of the preceding claims, **characterized in that** the ratio of fibers is higher than 50% of the total volume of the composite material formed by the fibrous webs (7).

10. The thrust reverser cascade (1) according to claim 9, **characterized in that** the ratio of fibers is about 60% of the total volume of the composite material formed by the fibrous webs (7).

11. The thrust reverser cascade (1) according to any one of the preceding claims, **characterized in that** the fiber pieces (8) have a thickness comprised between 0.1 mm and 0.4 mm, a length comprised between 15 mm and 60 mm and a width comprised between 10 mm and 40 mm.

12. The thrust reverser cascade (1) according to any one of the preceding claims, **characterized in that** the fiber pieces (8) comprise woven fibers to form mats of woven fiber pieces pre-impregnated with resin.

13. The thrust reverser cascade (1) according to any one of claims 1 to 12, **characterized in that** the fibers are trapped within a thermosetting matrix such as from the epoxides, benzoxazines, polyesters, bismaleimides family.

14. The thrust reverser cascade (1) according to any one of claims 1 to 12, **characterized in that** the fibers are trapped within one or several thermoplastic matrices such as from the polyamides, polypropylenes, PEI, PES, PPS, PAEK, PEEK, PEKK family.
